# EUROPÄISCHE PATENTSCHRIFT

(11) **EP 2 425 080 B1**
(45) Veröffentlichungstag und Bekanntmachung des Hinweises auf die Patenterteilung: **15.10.2014**
(21) Anmeldenummer: 10718917.7
(22) Anmeldetag: 16.04.2010
(51) Int. Cl.: E05F 5/10, F16F 9/34

(54) **DÄMPFER FÜR MÖBEL**
DAMPER FOR FURNITURE
AMORTISSEUR POUR DES MEUBLES

(30) Priorität: 28.04.2009 DE 202009004752 U
(43) Veröffentlichungstag der Anmeldung: 07.03.2012
(60) Teilanmeldung: 14153782.9
(73) Patentinhaber: Druck- und Spritzgußwerk Hettich GmbH & Co. KG, 35066 Frankenberg (DE)
(72) Erfinder: WEBER, Konrad, 35085 Ebsdorfergrund (DE)
(74) Vertreter: Dantz, Jan Henning
(86) Internationale Anmeldenummer: PCT/EP2010/055034
(87) Internationale Veröffentlichungsnummer: WO 2010/124945

(56) Entgegenhaltungen:
- WO-A2-2007/099100
- DE-A1- 19 532 996
- US-A- 4 310 148
- US-A- 4 438 833
- US-A1- 2002 162 714

## Beschreibung

Die vorliegende Erfindung betrifft einen Dämpfer für Möbel, insbesondere für Scharniere, mit einem Gehäuse, in dem ein mit einer Kolbenstange verbundener Kolben verschiebbar aufgenommen ist, wobei ein Fluid bei einer Bewegung des Kolbens innerhalb des Gehäuses durch einen Strömungskanal am oder im Kolben strömt, und bei Bewegung des Kolbens in unterschiedliche Richtungen eine unterschiedliche Dämpfungskraft erhalten wird, wobei der Querschnitt des Strömungskanals an mindestens einer Nut bereichsweise veränderbar ist, in dem relativ zum Kolben eine Platte bewegbar ist.

Aus der WO 2007/099100 ist ein Dämpfer für Möbel bekannt, bei dem ein Kolben in einem zylindrischen Gehäuse verschiebbar ist. Das Gehäuse ist mit einem Fluid befüllt, damit bei einer Bewegung des Kolbens eine Dämpfung einer Bewegung erfolgt, wobei die Dämpfungskräfte je nach Bewegungsrichtung des Kolbens unterschiedlich sind. Hierfür ist eine relativ zu dem Kolben bewegliche Platte vorgesehen, mittels der der Querschnitt eines Strömungskanals an einer Nut veränderbar ist.

Ein solcher Dämpfer hat sich an sich bewährt, allerdings ist die Strömungsgeschwindigkeit des Fluids in dem Strömungskanal sehr hoch. Gerade bei schnellen Bewegungen eines Möbelteils können hohe Spitzenbelastungen auf den Dämpfer einwirken. Dadurch kann es aufgrund erheblicher Druckunterschiede zu Kavitation im Dämpfer kommen.

Die US 4,438,833 offenbart einen Dämpfer nach dem Oberbegriff des Anspruchs 1 mit einem in einem Gehäuse bewegbar angeordneten Kolben, in dem ein axialer Strömungskanal ausgebildet ist. Der Strömungskanal ist auf einer Seite durch eine relativ zum Kolben bewegbare Platte verschlossen, so dass unterschiedlich große Dämpfungskräfte bei einer Bewegung des Kolbens in unterschiedliche Richtungen erhalten werden.

Es ist daher Aufgabe der vorliegenden Erfindung, einen Dämpfer für Möbel zu schaffen, bei dem auch hohe Spitzenbelastungen ohne die Gefahr von Kavitation aufgenommen werden können.

Diese Aufgabe wird mit einem Dämpfer mit den Merkmalen des Anspruches 1 gelöst.

Erfindungsgemäß ist zur Vermeidung von Kavitation an der mindestens einen Nut ein im Wesentlichen trichterförmiger Auslauf ausgebildet. Die Nut weist vorzugsweise einen in radialer Richtung winklig angeordneten Abschnitt auf. Durch den trichterförmigen Auslauf kann im Bereich des Übergangs zwischen der Nut und einem Strömungskanal in axialer Richtung ein trichterförmiger Übergang geschaffen werden, so dass die Strömungsgeschwindigkeit nicht abrupt verringert wird, sondern in diesem Übergangsbereich durch Querschnittserweiterung allmählich verringert wird. Dieser trichterförmige Übergang bewirkt, dass das Fluid nicht schlagartig, sondern mit einem sanften Übergang in den Strömungskanal in axialer Richtung des Kolbes einströmt. Dies verbessert die Geschwindigkeits- und Druckverhältnisse zur Vermeidung von Kavitation. Zudem ist es möglich, die Nut mit einem zur radialen Richtung winklig angeordneten Abschnitt zu versehen. Dadurch wird die Nut verglichen mit einer rein radialen Erstreckung verlängert, so dass die Drosselwirkung der Nut sich auf eine längere Wegstrecke verteilt und die Nut somit im Querschnitt größer ausgebildet sein kann. Auch diese Maßnahme verringert die Neigung zur Kavitation, da aufgrund des größeren Querschnitts der Nut auch etwas geringere Strömungsgeschwindigkeiten erreicht werden.

In einer bevorzugten Ausgestaltung der Erfindung weist die Nut einen gebogenen Abschnitt auf. Die Nut kann dabei wellen- oder spiralförmig ausgebildet sein. Durch diese Maßnahme wird die Nut verglichen mit einer rein radialen Erstreckung verlängert, so dass die Drosselwirkung der Nut sich auf eine längere Wegstrecke verteilt und die Nut somit im Querschnitt größer ausgebildet sein kann. Die Nut kann dabei eine Länge von mindestens 0,5 bis 15 mm aufweisen, was verglichen mit dem üblichen Durchmesser eines Kolbens relativ lang ist.

Erfindungsgemäß weist der trichterförmige Auslauf abgerundete Übergänge auf Dadurch ist der trichterförmige Auslauf trompetenförmig ausgebildet, so dass ein besonders sanfter Übergang aus dem Drosselspalt der Nut erfolgt. Der trichterförmige Auslauf ist dabei benachbart zu einem axialen Strömungskanal des Kolbens angeordnet, denn die Kavitation tritt insbesondere am Übergang zwischen dem Drosselspalt und dem axialen Strömungskanal auf.

Der Dämpfer kann dabei sowohl als Druck- als auch als Zugdämpfer ausgestaltet sein. Es sind jedoch die Druckdämpfer, die auf Grund ihrer Gestaltung belastbarer sind.

Die Erfindung wird nachfolgend anhand zweier Ausführungsbeispiele mit Bezug auf die beigefügten Zeichnungen näher erläutert. Es zeigen:
- Figur 1: eine perspektivische Ansicht eines erfindungsgemäßen Dämpfers;
- Figur 2: eine Ansicht des Dämpfers der Figur 1 mit geschnittenem Gehäuse;
- Figur 3: eine Explosionsdarstellung des Dämpfers der Figur 1;
- Figur 4: eine Seitenansicht des Dämpfers der Figur 1 im Schnitt;
- Figuren 5 und 6: zwei vergrößerte Darstellungen des Kolbens des Dämpfers der Figur 1;
- Figur 7: eine perspektivische Ansicht eines zweiten Ausführungsbeispieles eines erfindungsgemäßen Dämpfers;
- Figuren 8 und 9: zwei Ansichten des Dämpfers der Figur 7 mit geschnittenem Gehäuse, und
- Figur 10: eine perspektivische Detailansicht des Kolbens des Dämpfers der Figur 7.

Ein Dämpfer 1, insbesondere für Möbel, umfasst ein im Wesentlichen zylinderförmiges Gehäuse 2, aus dem eine Kolbenstange 3 herausragt. An der Kolbenstange 3 ist endseitig ein Verbindungselement 4 mit einer senkrecht zur Axialrichtung angeordneten Durchgangsöffnung 5 ausgebildet, an der ein Bolzen, beispielsweise eines Scharniers, koppelbar ist. An der gegenüberliegenden Seite ist an dem Gehäuse 2 ebenfalls eine senkrecht zur Längsrichtung erstreckende Durchgangsöffnung 6 zur Verbindung mit dem Scharnier ausgebildet.

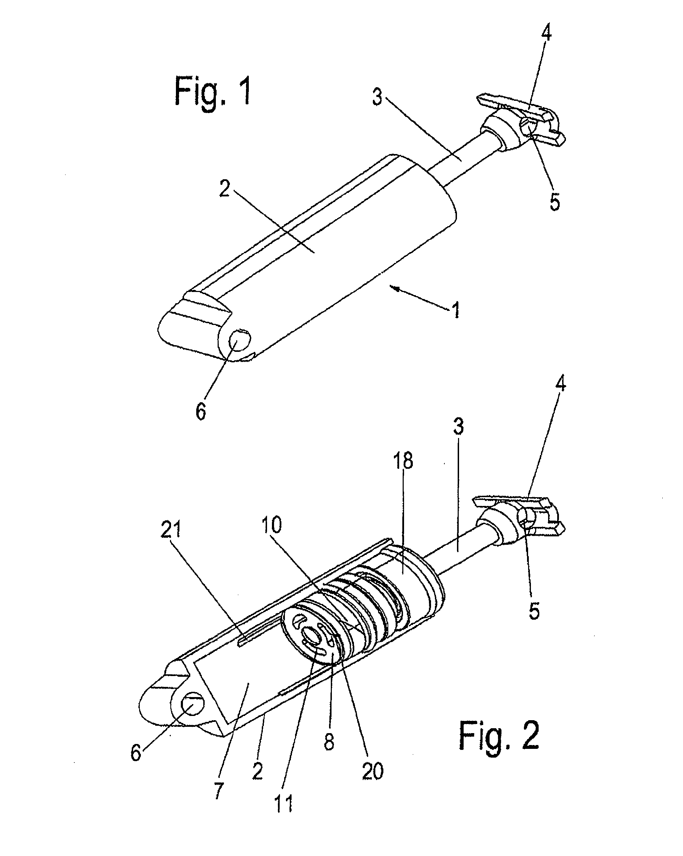

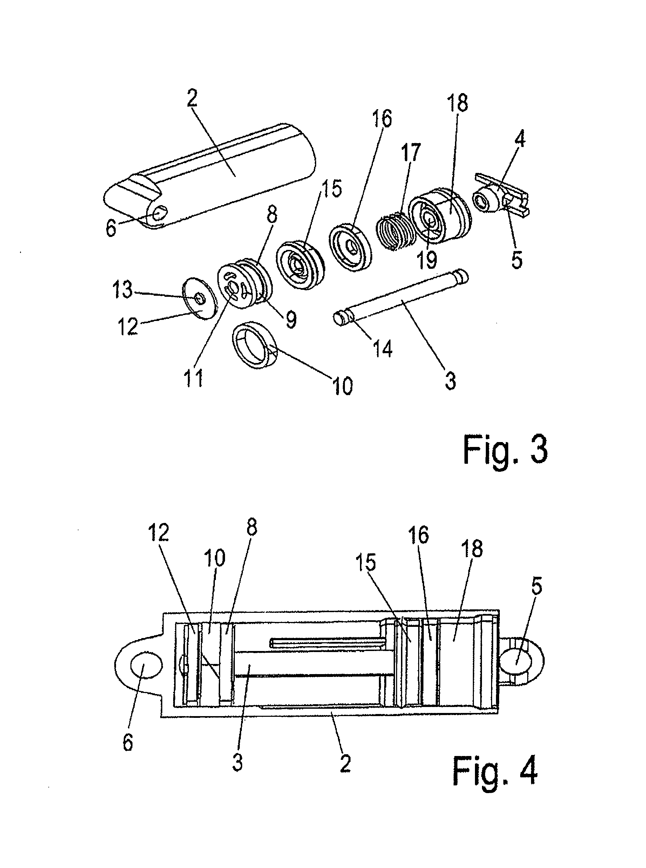

Wie in den Figuren 2 und 3 gezeigt ist, ist in einem Innenraum 7 des Gehäuses 2 ein in Axialrichtung verschiebbarer Kolben 8 angeordnet. Der Kolben 8 weist eine ringförmigen. Nut 9 für einen Dichtring 10 auf, der den Kolben 8 an einer Innenwand des Gehäuses 2 entlangführt und abdichtet. In dem Kolben 8 sind mehrere in Axialrichtung erstreckende Durchgangsöffnungen 11 mit länglichem gebogenem Querschnitt ausgebildet, die von einem Fluid durchströmbar sind. An mindestens einer dieser Durchgangsöffnungen 11 ist ein radialer Kanal 20 ausgebildet. Der Kolben 8 ist endseitig durch eine Platte 12 verschlossen, die die Durchgangsöffnungen 11 abdeckt, wenn die Platte 12 auf dem Kolben 8 aufliegt. Dies ist im dargelegten Ausführungsbeispiel der Fall, in dem sich der Kolben 8 in den Zylinder hinein bewegt, wobei der Dämpfer als Druckdämpfer ausgebildet ist. Es ist natürlich umgekehrt auch möglich, den Dämpfer als Zugdämpfer auszubilden.

Die Platte 12 ist aus einem elastischen Material gebildet und weist eine mittige Öffnung 13 auf. Die Platte 12 ist an der Öffnung 13 am Kolben 8 festgelegt. Bei einer Bewegung des Kolbens 8 kann die Platte 12 wahlweise von dem Kolben 8 weggebogen oder auf diesen gedrückt werden, so dass abhängig von der Position der Platte 12 die Durchgangsöffnungen 11 ganz oder nur teilweise verschlossen sind. Sind die Durchgangsöffnungen 11 durch die Platte 12 verschlossen, strömt das Fluid lediglich durch die radiale Nut 20. Die Platte 12 kann statt einer elastischen Ausgestaltung auch verschiebbar am Kolben 8 sein. Der Kolben 8 ist an dem Ende der Kolbenstange 3 an einer Nut 14 befestigt. Die Platte 12 ist mit einer Schraube an der Kolbenstirnseite angeschraubt oder die Platte 12 ist mit der Kolbenstimseite verprägt. Entscheidend ist dabei, dass die bewegliche Platte 12 zur Dämpfung auf den Kolben 8 und somit auf die Nut 20 zur Drosselwirkung des Fluids gepresst wird.

Um bei einer Bewegung des Kolbens 8 einen Volumenausgleich vornehmen zu können, ist an der offenen Seite des Gehäuses 2 an einem Deckel 18 ein Ausgleichselement mit einer Dichtscheibe 15, die an einem Ring 16 angeordnet ist, der an einer Seite einer Feder 17 anliegt. Das gegenüberliegende Ende der Feder 17 ist an einer ringförmigen Aufnahme des Deckels 18 abgestützt, durch die eine Öffnung 19 zur Durchführung der Kolbenstange 3 ausgebildet ist.

In Figur 4 ist eine endseitige Position des Kolbens 8 in dem Gehäuse 2 dargestellt. Die Kolbenstange 3 ist in das Gehäuse 2 des Dämpfers eingefahren und kann nun herausgezogen werden, wobei sich der Kolben 8 nach rechts bewegt und das Fluid durch die Durchgangsöffnungen 11 strömt. In diese Richtung wird nur eine geringe Dämpfungskraft erzeugt, da sich die Platte 12 elastisch aufbiegt oder geringfügig verschoben wird, so dass der Strömungsquerschnitt an oder in dem Kolben 8 für das Fluid relativ groß bleibt. Bei einer Bewegung in die gegenüberliegende Richtung wird jedoch die Platte 12 auf die Durchgangsöffnungen 11 gedrückt, so dass das Fluid nur noch durch die radiale Nut 20 in eine der Durchgangsöffnungen 11 strömen kann.

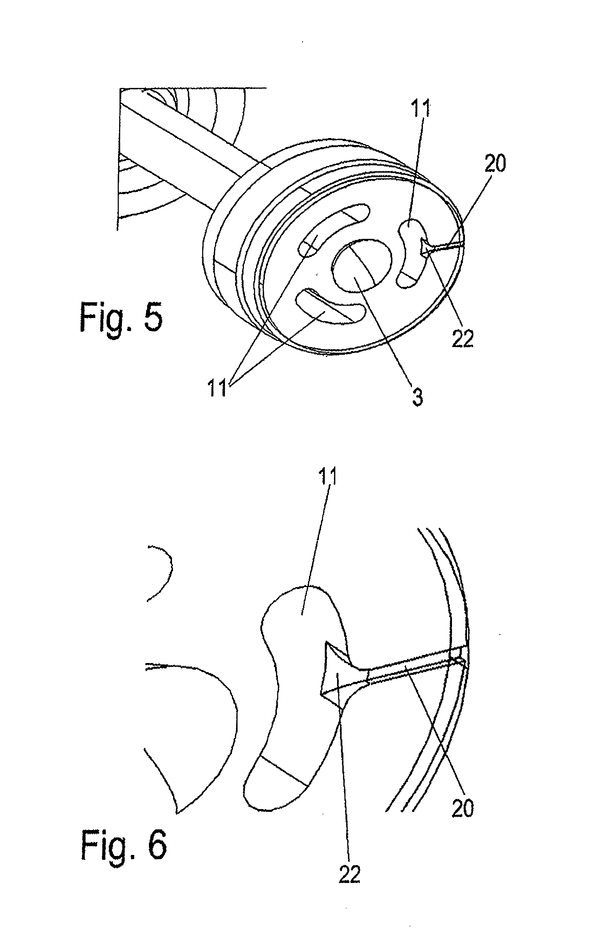

In den Figuren 5 und 6 ist die äußere Stirnseite des Kolbens 8 vergrößern dargestellt, an der die Durchgangsöffnungen 11 und die radiale Nut 20 zu erkennen sind. Die radiale Nut 20 ist an dem Übergang zur Durchgangsöffnung 11 mit einem trichterförmigen Auslauf 22 versehen, der zur Durclzgangsöffnung 11 hin gerundet ausgebildet ist und somit trompetenartig verläuft. Der Krümnungsradius im Bereich des Übergangs zwischen der Nut 20 und den axialen Durchgangsöffnungen 11 kann in dem Bereich zwischen 0,3 bis 2 mm liegen.

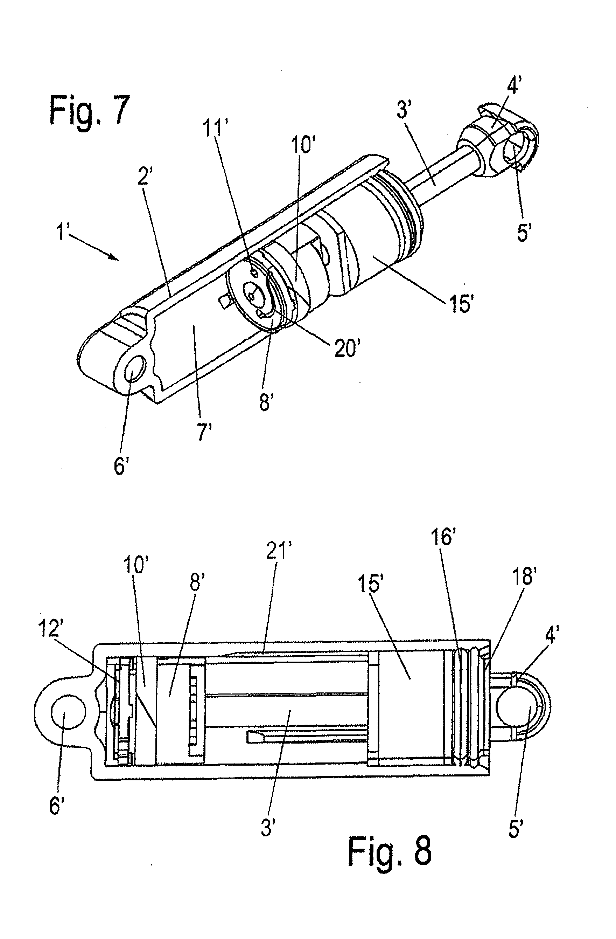

In den Figuren 7 bis 10 ist eine zweite Ausführungsform eines erfindungsgemäßen Dämpfers 1' dargestellt, der ein zylinderförmiges Gehäuse 2' aufweist, in dem eine Kolbenstange 3' mit einem Kolben 8' verschiebbar gelagert ist. Die Kolbenstange 3' ragt aus dem Gehäuse 2' mit einem Endabschnitt heraus, an dem ein Verbindungselement 4' mit einer Durchgangsöffnung 5' ausgebildet ist. An der gegenüberliegenden Seite ist an dem Gehäuse 2' ebenfalls eine Öffnung 6' zur Verbindung mit einem weiteren Bauteil vorgesehen.

Der Dämpfer 1' umfasst wie bei dem vorangegangenen Ausführungsbeispiel einen mit einem Fluid befüllten Innenraum 7', das zur Dämpfung eingesetzt wird. Der Kolben 8' weist an seinem äußeren Umfang einen Dichtring 10' auf und besitzt zwei kreisförmige Durchgangsöffnungen 11', wobei sich von einer Durchgangsöffnung 11' eine Nut 20' an einer Stirnseite des Kolbens 8' erstreckt.

In dem Gehäuse 2' ist auf der offenen Seite ein Deckel 18' vorgesehen, an dem für einen Volumenausgleich ein Ausgleichselement mit einem Dichtelemcnt 16' angeordnet ist, an dem ein komprimierbares Element, beispielsweise einen federbeaufschlagten Ausgleichskolben oder ein elastisch- kompressibles Element vorgesehen ist. Es ist auch möglich, andere elastische Elemente vorzusehen.

An einer Innenwand des Gehäuses 2' sind ein oder mehrere in Axialrichtung verlaufende Nuten 21' ausgebildet, die in diesem Bereich eine Verbindung zwischen den beiden durch den Kolben 8' getrennten Kammern ermöglichen. Die Nuten 21' enden jedoch vor einem Endabschnitt des Kolbens 8', so dass beim Einschieben des Kolbens 8 erst in diesem Endabschnitt des Kolbens 8 ein entsprechender Druck aufgebaut werden kann, der dann nur noch über den Drosselspalt 20, 20' abgebaut werden kann

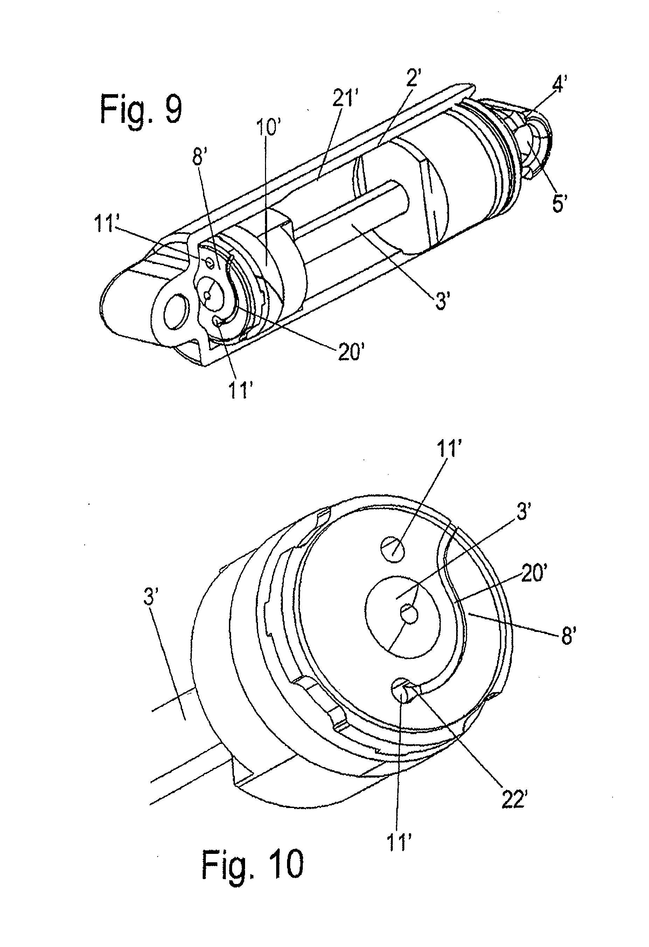

Wie in Figur 10 gezeigt ist, befindet sich zwischen der Durchgangsöffnung 11' in axialer Richtung und der senkrecht dazu angeordneten Nut 20' an der Stirnseite des Kolbens 8' ein trichterförmiger Übergang 22', der wie bei dem vorangegangenen Ausführungsbeispiel trompetenförmig gerundet ausgebildet ist. Zusätzlich erstreckt sich die Nut 20' nicht nur in radiale Richtung, sondern ist deutlich länger ausgebildet und verläuft wellenförmig an einer Stirnseite des Kolbens 8'. Die Nut 20' ist dabei um das Kolbenzentrum 3' herumgeführt, so dass die Länge der Nut 20' zwischen 5mm und 15mm betragen kann, was verglichen mit den vorbekannten Strömungskanälen eine deutliche Verlängerung ist. Die Nut 20' kann somit im Querschnitt größer ausgebildet sein, da die Drosselfunktion nicht nur auf einen kurzen Abschnitt beschränkt wird, sondern durch die weitaus längere Ausbildung sich über die gesamte Länge der Nut 20' verteilen kann. Auch andere Formen der Nut 20' sind möglich, insbesondere kann die Nut 20' gewindeartig um das Kolbenzentrum 3' geführt sein oder andere Krümmungen und Geometrien aufweisen.

## Patentansprüche

1. Dämpfer (1, 1') für Möbel, insbesondere für Scharniere, mit einem Gehäuse (2, 2'), in dem ein mit einer Kolbenstange (3, 3') verbundener Kolben (8, 8') verschiebbar aufgenommen ist, wobei ein Fluid bei einer Bewegung des Kolbens (8, 8') innerhalb des Gehäuses (2, 2') durch mindestens einen Strömungskanal am oder im Kolben (8, 8') strömt, wobei bei Bewegung des Kolbens (8, 8') in unterschiedliche Richtungen eine unterschiedliche Dämpfungskraft erhalten wird und der Querschnitt des Strömungskanals an mindestens einer Nut (20, 20') bereichsweise veränderbar ist, indem relativ zum Kolben (8, 8') eine Platte (12, 12') bewegbar ist, wobei an der mindestens einen Nut (20, 20') zur Vermeidung von Kavitation ein im Wesentlichen trichterförmiger Auslauf (22, 22') benachbart zu einem axialen Strömungskanal an dem Kolben (8, 8') angeordnet ist, wobei sich von einer axialen Durchgangsöffnung (11, 11') des Strömungskanals die Nut (20, 20') an einer Stirnseite des Kolbens (8, 8') erstreck, **dadurch gekennzeichnet, dass** der trichterförmige Auslauf (22, 22') abgerundete Übergänge aufweist und der Krümmungsradius im Bereich des Übergangs zwischen der Nut (20, 20') und der axialen Durchgangsöffnung (11, 11') in einem Bereich zwischen 0,3 bis 2 mm liegt.

2. Dämpfer nach Anspruch 1, **dadurch gekennzeichnet, dass** die Nut (20') einen gebogenen Abschnitt aufweist.

3. Dämpfer nach Anspruch 1 oder 2, **dadurch gekennzeichnet, dass** die Nut (20') wellen- oder spiralförmig ausgebildet ist.

4. Dämpfer nach einem der Ansprüche 1 bis 3, **dadurch gekennzeichnet, dass** die Nut (20') eine Länge von mindestens 5mm aufweist.

5. Dämpfer nach einem der Ansprüche 1 bis 4, **dadurch gekennzeichnet, dass** die Nut (20') einen zur radialen Richtung winklig angeordneten Abschnitt aufweist.

## Claims

1. A damper (1, 1') for furniture, especially for hinges, comprising a housing (2, 2') in which a piston (8, 8') connected to a piston rod (3, 3') is received so that it can be displaced, whereby a fluid flows through at least one flow channel on or in the piston (8, 8') during a movement of the piston (8, 8') inside the housing (2, 2'), wherein a different damping force is obtained during movement of the piston (8, 8') in different directions and the cross-section of the flow channel can be modified in some sections on at least one groove (20, 20') since a plate (12, 12') can be moved relative to the piston (8, 8'), whereby on the at least one groove (20, 20') a substantially funnel-shaped outlet (22, 22') adjacent to the axial extending flow channel on the piston (8, 8') is arranged to avoid cavitation, wherein the groove (20, 20') on the end face of the piston (8, 8') extends from an axial flow through opening (11, 11') of the flow channel, **characterized in that** the funnel-shaped outlet (22, 22') has rounded transitions and the radius of curvature in the transition area of the groove (20, 20') and the axial flow through opening (11, 11') is in a range between 0,3 and 2mm.

2. The damper according to claim 1, **characterized in that** the groove (20') has a bent section.

3. The damper according to claim 1 or 2, **characterized in that** the groove (20') is configured to be wavy or spiral-shaped.

4. The damper according to one of claims 1 to 3, **characterized in that** the groove (20') has a length of at least 5 mm.

5. The damper according to one of claims 1 to 4, **characterized in that** the groove (20') comprises a portion extending inclined to the radial direction.

## Revendications

1. Amortisseur (1, 1') pour des meubles, notamment pour des charnières comportant :
- un boîtier (2, 2') recevant en coulissement un piston (8, 8') relié à une tige de piston (3, 3'),
un liquide passant au moins à travers un canal d'écoulement sur ou dans le piston (8, 8') lors du mouvement du piston (8, 8') dans le boîtier (2, 2'),
le mouvement du piston (8, 8') dans des directions différentes générant une force d'amortissement différente et la section du canal d'écoulement au niveau d'au moins une rainure (20, 20') pouvant être modifié par zone en ce que le piston (8, 8') porte de manière mobile une plaque (12, 12'),
la rainure (20, 20'), pour éviter la cavitation, ayant une sortie (22, 22') pratiquement en forme d'entonnoir au voisinage du canal d'écoulement axial du piston (8, 8'),
la rainure (20, 20') s'étendant sur le côté frontal (8, 8') du piston à partir d'un orifice de passage axial (11, 11') du canal d'écoulement, amortisseur **caractérisé en ce que**
la sortie (22, 22') en forme d'entonnoir comporte des transitions arrondies, et
le rayon de courbure dans la région de la transition entre la rainure (20, 20') et l'orifice de passage axial (11, 11') étant dans une plage comprise entre 0,3 et 2 mm.

2. Amortisseur selon la revendication 1,
**caractérisé en ce que**
la rainure (20') a un segment courbe.

3. Amortisseur selon la revendication 1 ou 2,
**caractérisé en ce que**
la rainure (20') a une forme ondulée ou en spirale.

4. Amortisseur selon l'une des revendications 1 à 3,
**caractérisé en ce que**
la rainure (20') a une longueur d'au moins 5 mm.

5. Amortisseur selon l'une des revendications 1 à 4,
**caractérisé en ce que**
la rainure (20') a un segment faisant un angle par rapport à la direction radiale.
